(19) Europäisches Patentamt / European Patent Office / Office européen des brevets

(11) **EP 4 656 894 A1**

(12) **EUROPEAN PATENT APPLICATION**
published in accordance with Art. 153(4) EPC

(43) Date of publication:
**03.12.2025 Bulletin 2025/49**

(21) Application number: **24760396.2**

(22) Date of filing: **21.02.2024**

(51) International Patent Classification (IPC):
*F16C 33/20* (2006.01)      *B22F 3/035* (2006.01)
*B22F 3/11* (2006.01)       *B22F 3/26* (2006.01)
*B22F 5/00* (2006.01)       *C08K 3/04* (2006.01)
*C08K 3/30* (2006.01)       *C08L 27/12* (2006.01)
*C08L 77/10* (2006.01)      *C08L 101/00* (2006.01)
*C22C 1/08* (2006.01)       *C22C 9/00* (2006.01)
*C22C 9/02* (2006.01)       *C22C 9/06* (2006.01)
*F16C 33/12* (2006.01)      *F16C 33/14* (2006.01)

(52) Cooperative Patent Classification (CPC):
**B22F 1/00; B22F 3/03; B22F 3/11; B22F 3/26;
B22F 5/00; B22F 7/00; B22F 7/04; C08K 3/04;
C08K 3/30; C08L 27/12; C08L 77/10; C08L 101/00;
C22C 1/08; C22C 9/00; C22C 9/02;**      (Cont.)

(86) International application number:
**PCT/JP2024/006171**

(87) International publication number:
**WO 2024/177098 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.02.2023   JP 2023026107**

(71) Applicant: **Senju Metal Industry Co., Ltd.
Tokyo 120-8555 (JP)**

(72) Inventors:
 • **SATO Naoki
   Tokyo 120-8555 (JP)**
 • **NIWATA Asahi
   Tokyo 120-8555 (JP)**
 • **NOGUCHI Naokazu
   Tokyo 120-8555 (JP)**
 • **SEKINE Shigeyuki
   Tokyo 120-8555 (JP)**
 • **TAKAHASHI Hideaki
   Tokyo 120-8555 (JP)**
 • **KAWAMATA Yuji
   Tokyo 120-8555 (JP)**
 • **SUZUKI Ryoichi
   Tokyo 120-8555 (JP)**

(74) Representative: **Hoffmann Eitle
Patent- und Rechtsanwälte PartmbB
Arabellastraße 30
81925 München (DE)**

(54) **SLIDING MEMBER AND METHOD FOR PRODUCING SLIDING MEMBER**

(57)   A sliding member includes a cylindrical metal substrate, a seamless porous layer formed on the inner peripheral surface of the metal substrate, and a sliding layer covering the porous layer, wherein the porous layer is formed of a metal simple substance or an alloy composition, and the sliding layer is formed of a resin composition.

# FIG. 1

(52) Cooperative Patent Classification (CPC): (Cont.)
C22C 9/06; F16C 17/02; F16C 33/12; F16C 33/14;
F16C 33/20

**Description**

Technical Field

The present disclosure relates to a sliding member and a method for manufacturing the sliding member.

Background Art

Nowadays, electric cars (electric vehicles: EVs), including batteries and motors as power source, have been increasingly substituted for conventional cars, including engines as power source, from the viewpoint of energy efficiency and $CO_2$ emissions. Since the outputs of motors depend on the rotational speeds and the torques, increases in the rotational speeds enable controlling the torques to reduce the volumes. Increases in the rotational speeds of motors are therefore essential for the downsizing and the weight saving of parts and the power saving. Electric compressors including built-in driving motors have been increasingly strongly required to be downsized and lightened in car air conditioners for maintaining the comfortability in cars.

The Transmission Research Association for Mobility Innovation (TRAMI), which is the union of domestic automakers and others, has announced that TRAMI will shift the priority of the investigation from internal combustion engines to motors for electric cars (EVs) and technology related thereto. Although most existing motors for EVs rotate at speeds of around 13,000 rpm, the rotational speeds of motors will expectedly increase to 20,000 rpm or more in the near future. The investigation has therefore been advanced for achieving an ultra-high rotational speed of 30,000 to 50,000 rpm. Countermeasures are required to be taken against higher-speed rotation for balancing the downsizing and weight saving and the output enhancement especially for driving motors and electric compressors of EVs.

In rotary machines such as motors and compressors, supporting the main shafts, components such as bearings and seals supporting the rotating objects thereof play important roles. The sliding surfaces of these mechanical components deteriorate with time, resulting in increases in the coefficients of friction or the abrasion thereof. Consequently, heat is generated to raise the temperature, so that various parts of the rotary machines begin to deteriorate. Finally, the rotary machines cannot function as machines satisfactorily to reach their life spans. If friction or heat generation accompanying increases in the rotational speeds of motors allows oil that should be in spaces of bearings supporting the rotating shafts to flow out, or foreign substances enter the spaces, the sliding surfaces rise in temperature abnormally or vibrate abnormally violently, so that the surfaces of the sliding materials begin to be molten, leading to seizure. Thus, the performance deterioration or the malfunction of mechanical parts often results mainly from friction or abrasion. An encapsulated refrigerant and refrigerator oil are used for lubricating plain bearings for compressors. The lubrication conditions greatly vary depending on conditions of use. If bearings are lubricated with only a liquefied refrigerant or almost dry, severe lubrication conditions are expected.

Accordingly, plain bearings that are high in abrasion resistance or seizure resistance are required under conditions of use of boundary lubrication on which it is difficult to form oil films, for example, due to increase in rotational speeds of drive trains or the eccentricity of the shafts. Furthermore, plain bearings are also required to be assembled highly precisely for the following reason: the dimensional precision of bearings related to the spaces between the shafts and the bearings, the shapes of the inner surfaces of the bearings, which contacts with the shafts, and the presence or absence of protrusions of seams greatly affect the lives of machines.

Since the conditions of use around bearings are hard due to the shift to new refrigerants accompanying chlorofluorocarbon regulations or countermeasures against global warming, bearings are required having still higher performances to plain bearings used for compressors.

Japanese Patent Laid-Open No. 2018-179049 proposes that a rolling bearing be used in portions of auto parts or others required to rotate at high speed. Unfortunately, rolling bearings have shorter lives than plain bearings. Plain bearings have been desired that are usable even at high rotational speed and have longer lives.

Summary of Invention

It is desired to provide a sliding member excellent in abrasion resistance and seizure resistance in a high-speed rotation region and a method for manufacturing the sliding member.

A sliding member according to one embodiment comprises

a cylindrical metal substrate;
a seamless porous layer formed on the inner peripheral surface of the metal substrate; and
a sliding layer covering the porous layer,
the porous layer is formed of a metal simple substance or an alloy composition, and
the sliding layer is formed of a resin composition.

A bearing according to one embodiment comprises

a cylindrical metal substrate;
a porous layer formed on the inner peripheral surface of the metal substrate; and
a sliding layer covering the porous layer,
the porous layer is formed of a metal simple substance or an alloy composition, and
the sliding layer is formed of a resin composition.

A method for manufacturing a sliding member having a seamless sliding surface according to one embodiment comprises:

a step of disposing a columnar or cylindrical jig inside a cylindrical metal substrate, and packing raw material powder of a porous layer into the space between the inner peripheral surface of the metal substrate and the outer peripheral surface of the jig;
a step of sintering the raw material powder to form a seamless porous layer comprising a metal simple substance or an alloy composition on the inner peripheral surface of the metal substrate;
a step of impregnating the surface of the porous layer with a raw material resin of a sliding layer; and
a step of firing the raw material resin to form a sliding layer comprising the resin composition and covering the porous layer.

Brief Description of Drawings

[Figure 1] Figure 1 is a perspective view showing a schematic configuration of a sliding member according to one embodiment.
[Figure 2] Figure 2 is a photographic image showing the appearance of a sliding member according to one embodiment.
[Figure 3] Figure 3 is a reflected electron composition image of a sectional structure of a sliding member according to one embodiment.
[Figure 4] Figure 4 is a flow chart showing one example of a method for manufacturing a sliding member according to one embodiment.
[Figure 5] Figure 5 illustrates a step of packing raw material powder.
[Figure 6A] Figure 6A illustrates the shape of a jig for the packing step of raw material powder.
[Figure 6B] Figure 6B illustrates a step of packing raw material powder in the case where a metal substrate has a seam.
[Figure 7] Figure 7 illustrates a step of impregnation with raw material resin.
[Figure 8] Figure 8 illustrates a burnishing step.
[Figure 9] Figure 9 illustrates a manufacturing method as one example for comparison.
[Figure 10] Figure 10 illustrates a manufacturing method as another example for comparison.
[Figure 11] Figure 11 is a figure showing a schematic configuration of a high-speed rotational abrasion tester.
[Figure 12] Figure 12 is a table collectively showing the compositions and others of sliding members according to Examples 1 to 4 and Comparative Example.
[Figure 13] Figure 13 is a graph showing variations in the abrasion losses of the sliding members according to Examples 1 and 5 and Comparative Example vs. the shaft rotational speed measured in the high-speed rotational abrasion test.
[Figure 14] Figure 14 is a graph showing variations in the rates of increase in temperature on the rear sides of bearings, namely the sliding members according to Example 1 and Comparative Example, vs. the shaft rotational speed measured in the high-speed rotational abrasion test.
[Figure 15] Figure 15 is a graph showing variations over time in the temperatures on the rear sides of the sliding members according to Example 1 and Comparative Example measured in the high-speed rotational abrasion test.
[Figure 16] Figure 16 is a graph showing variations over time in power consumption of the sliding members according to Examples 1 and 5 and Comparative Example measured in the high-speed rotational abrasion test.
[Figure 17] Figure 17 is a graph showing variations in abrasion losses of the sliding members according to Examples 1 and 2 vs. the shaft rotational speed measured in the high-speed rotational abrasion test.
[Figure 18] Figure 18 is a graph showing variations in the rates of increase in temperature on the rear sides of the bearings, namely the sliding members according to Examples 1 and 2, vs. the shaft rotational speed measured in the high-speed rotational abrasion test.
[Figure 19] Figure 19 is a graph showing variations in abrasion losses of the sliding members according to Examples 3 and 4 vs. the shaft rotational speed measured in the high-speed rotational abrasion test.

[Figure 20] Figure 20 is a graph showing variations in the rates of increase in temperature on the rear sides of the bearings, namely the sliding members according to Examples 3 and 4, vs. the shaft rotational speed measured in the high-speed rotational abrasion test.

[Figure 21] Figure 21 is graphs showing the inner diameter circularities of the sliding members according to Examples 1 and 2.

[Figure 22] Figure 22 is graphs showing the inner diameter circularities of the sliding members according to Examples 3 and 4.

Description of Embodiments

A sliding member according to a first aspect of an embodiment comprises

a cylindrical metal substrate;
a seamless porous layer formed on the inner peripheral surface of the metal substrate; and
a sliding layer covering the porous layer,
the porous layer is formed of a metal simple substance or an alloy composition, and
the sliding layer is formed of a resin composition.

According to such an aspect, the porous layer is seamless, and therefore no seam appears on the sliding layer covering the porous layer, which reduces friction on the seam and heat generation due to the friction. This enables improving the abrasion resistance and the seizure resistance in a high-speed rotational region, and enables the sliding layer to improve in performance itself as a bearing.

The porous layer is seamless, and therefore no seam appears on the sliding layer covering the porous layer, which reduces torque generated by friction on the seam. This contributes to a decrease in power consumption, and reduces energy loss. Accordingly, this contributes to carbon neutral.

Conventional rolling bearings that are used at high rotational speed in EV motors and electric compressors can be replaced with the sliding member of the present embodiment, resulting in downsizing and weight saving.

Furthermore, if conventional sliding members having seamed sliding surfaces are applied to motors or compressors, a step of cutting the inner surface (namely aligning the inner surfaces on the seam portion) is necessary. Meanwhile, the sliding member according to the present embodiment has no seam on the porous layer, and therefore no seam appears on the sliding layer covering the porous layer, which enables omitting the step of cutting the inner surface. The omission of the step enables reducing industrial waste (carbon contained in resin compositions) to be generated during the cutting to contribute to carbon neutral.

A sliding member according to a second aspect of the embodiment is the sliding member according to the first aspect, wherein the sliding layer has an inner diameter circularity of 50 $\mu$m or less.

Such an embodiment further reduces friction on the inner peripheral surface of the sliding layer, resulting in the achievement of a further decline in abrasion and heat generation.

A sliding member according to a third aspect of the embodiment is the sliding member according to the first or second aspect,
a hard particle powder comprising a Laves phase constituted of a composition of Co, Mo and Si is dispersed in the sliding layer.

A sliding member according to a fourth aspect of the embodiment is the sliding member according to the third aspect,
wherein one or more of $MoS_2$ powder and bronze powder not comprising a Laves phase are further dispersed in the sliding layer.

A sliding member according to a fifth aspect of the embodiment is the sliding member according to the first or second aspect,
wherein the resin composition comprises copper sulfide, a thermoplastic resin, molybdenum disulfide, graphite, and aramid fiber, with the balance consisting of a fluorine resin, wherein the resin composition comprises more than 3% by mass and less than 40% by mass of the copper sulfide, 0% by mass or more and less than 4% by mass of the thermoplastic resin, 0% by mass or more and 36% by mass or less of the molybdenum disulfide, 0% by mass or more and 10% by mass or less of the graphite, and 0% by mass or more and 10% by mass or less of the aramid fiber, with the balance being the fluorine resin.

A sliding member according to a sixth aspect of the embodiment is the sliding member according to any of the first to fifth aspects,

the porous layer has

a matrix phase comprising Cu and Sn, and
hard particles dispersed in the matrix phase and comprising a Laves phase constituted of a composition of Co, Mo and Si.

A sliding member according to a seventh aspect of the embodiment is the sliding member according to the sixth aspect,

wherein the porous layer further has
compound phases dispersed in the matrix phase and containing Co, Fe, Ni, Si, and Cr.

A sliding member according to an eighth aspect of the embodiment is the sliding member according to any of the first to seventh aspects,
wherein the thickness ratio of the porous layer to the sliding layer is 6:4 to 8:2.
A sliding member according to a ninth aspect of the embodiment is the sliding member according to any of the first to eighth aspects,
wherein the metal substrate is also seamless.
A sliding member according to a tenth aspect of the embodiment is the sliding member according to any of the first to eighth aspects,
wherein the metal substrate has a seam.
Such an aspect enables cutting the manufacturing cost as compared with the aspect including the seamless metal substrate.
A bearing according to an eleventh aspect of the embodiment comprises

a cylindrical metal substrate;
a porous layer formed on the inner peripheral surface of the metal substrate; and
a sliding layer covering the porous layer,
the porous layer is formed of a metal simple substance or an alloy composition, and
the sliding layer is formed of a resin composition.

A method for manufacturing a sliding member having a seamless sliding surface according to a twelfth aspect of the embodiment comprises:

a step of disposing a columnar or cylindrical jig inside a cylindrical metal substrate, and packing raw material powder of a porous layer into the space between the inner peripheral surface of the metal substrate and the outer peripheral surface of the jig;
a step of sintering the raw material powder to form a seamless porous layer comprising a metal simple substance or an alloy composition on the inner peripheral surface of the metal substrate;
a step of impregnating the surface of the porous layer with a raw material resin of a sliding layer; and
a step of firing the raw material resin to form a sliding layer comprising the resin composition and covering the porous layer.

A method according to a thirteenth aspect of the embodiment is the method according to the twelfth aspect, further comprising:
a step of pressing a columnar cored bar inside the inner peripheral surface of the sliding layer with the outer peripheral surface of the metal substrate held with a die to burnish the inner peripheral surface of the sliding layer, resulting in a reduction of the inner diameter circularity to 50 $\mu$m or less.
The method according to a fourteenth aspect of the embodiment is the method according to the twelfth or thirteenth aspect,
wherein, in the step of packing the raw material powder, the raw material powder is packed into the space with the jig rotated and/or ultrasonic vibration applied to the jig.
The method according to a fifteenth aspect of the embodiment is the method according to any one of the twelfth to fourteenth aspects,
wherein, in the step of sintering the raw material powder, the raw material powder is sintered, with the metal substrate with the jig placed in a heating furnace.
Hereinafter, specific examples of embodiments will be described in detail with reference to the attached drawings. Noted that "%" with respect to compositions used herein is "% by mass" unless otherwise specified. "A to B" (both A and B are numbers) used herein means "A or more and B or less" unless otherwise specified. The "main ingredient" used herein refers to a component contained at 50% by mass or more with respect to the whole composition. As used herein, the "hard particle powder" refers to powder in the mixed powder before sintering or powder dispersed in the resin composition of the sliding layer, and the "hard particles" refer to particles in the porous layer after the sintering. Since Cu and Sn contained in the hard particle powder move into a matrix phase during the sintering to some extent as described below, the content of the hard particles in a porous layer varies from the amount of hard particle powder blended in the mixed powder, and the contents of constituent elements in the hard particles are different from the contents of constituent elements in the hard particle powder (the hard particles are particles having a composition in which the contents of Sn and Cu among the chemical components decrease to some extent as compared with the hard particle powder).

<Configuration of sliding member>

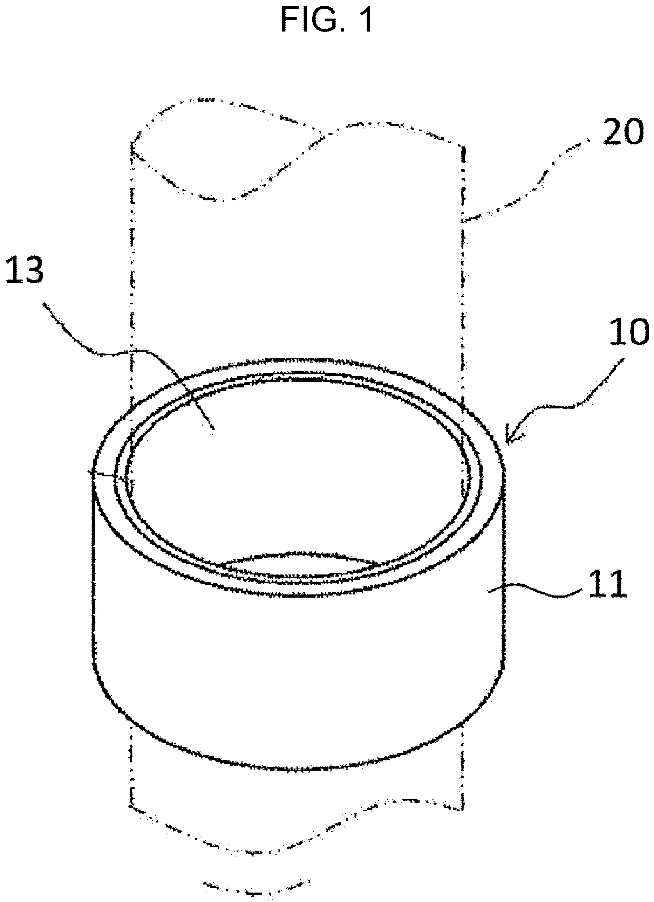

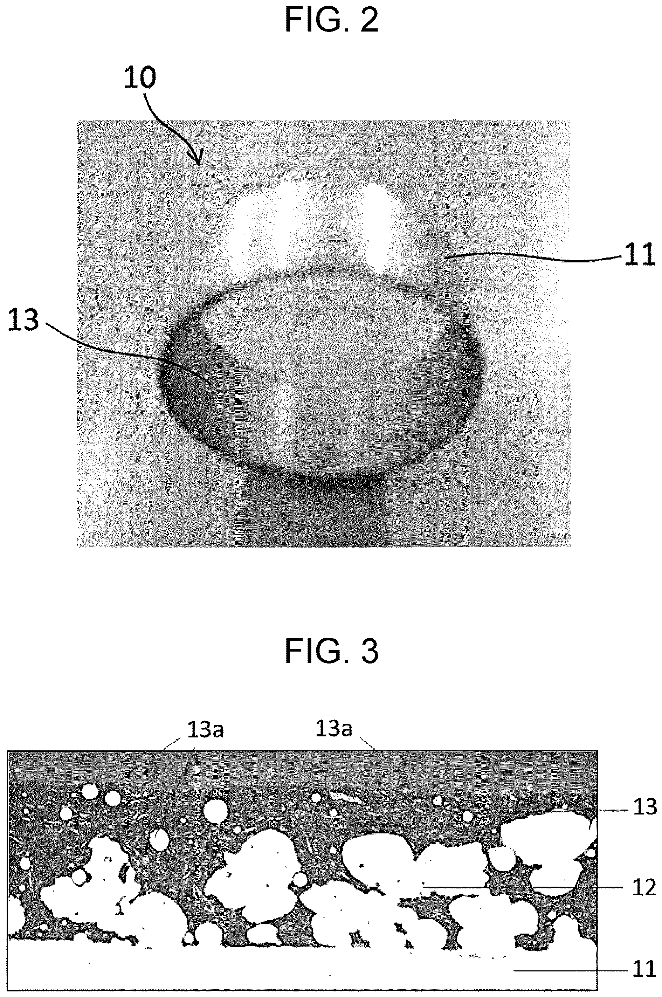

Figure 1 is a perspective view showing a schematic configuration of a sliding member 10 according to one embodiment. Figure 2 is a photographic image showing the appearance of the sliding member 10. Figure 3 is a reflected electron composition image of a sectional structure of a sliding member 10. In Figure 3, the upside of the figure corresponds to the inner periphery of the sliding member 10, and the downside of the figure corresponds to the outside of the sliding member 10.

As shown in Figures 1 to 3, for example, the sliding member 10 is a plain bearing, and comprises a cylindrical metal substrate 11, a seamless porous layer 12 formed on the inner peripheral surface of the metal substrate 11 and formed of a metal simple substance or an alloy composition, and a sliding layer 13 formed of a resin composition and covering the porous layer 12.

As shown in Figure 1, the sliding member 10 as a plain bearing supports a shaft 20 as an object to be slid on the sliding layer 13 forming a cylindrical inner peripheral surface. The sliding layer 13 may have an inner diameter circularity of 50 μm or less, or may have an inner diameter circularity of 20 μm or less. In this case, friction is reduced on the inner peripheral surface of the sliding layer 13, which enables achieving further decrease in abrasion and heat generation.

The sliding member 10 is applicable to either of a form in which a shaft 20 moves rotationally and a form in which a shaft 20 moves linearly. For example, the sliding member 10 may be used as sliding portions of shock absorbers for cars using oil in a form in which the shaft moves linearly. For example, the sliding member 10 may be used as sliding portions using oil in a rotary form such as gear pumps in which gear-shaped members are rotated to deliver the oil. Hereinafter, the components of the sliding member 10 will be described in detail.

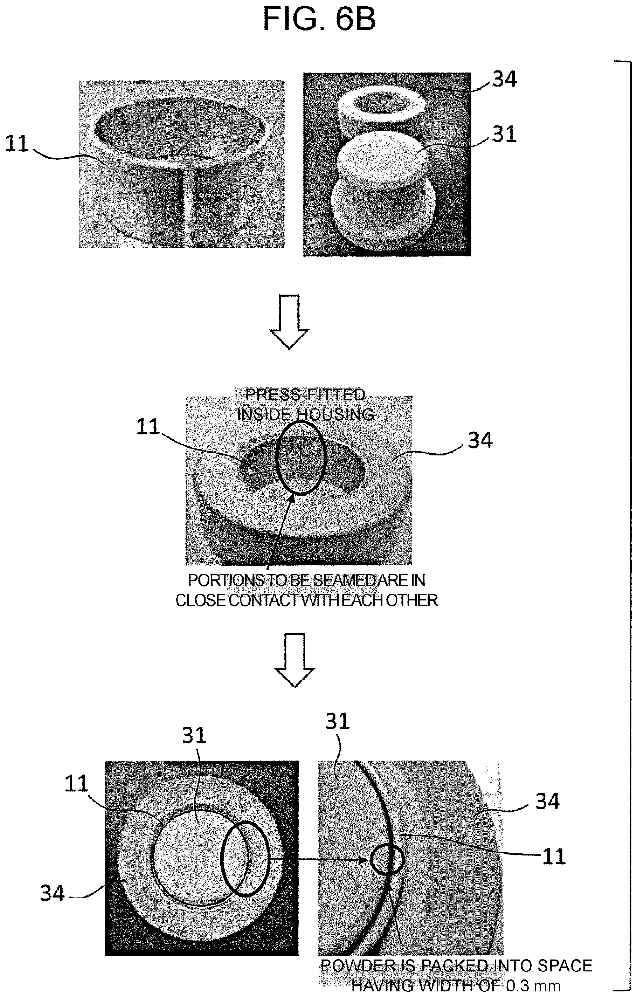

As shown in Figures 1 and 2, the metal substrate 11 has a cylindrical shape. As shown in Figure 2 as an example, the metal substrate 11 may be seamless. A seamless cylindrical metal substrate 11 itself is well-known, and can be manufactured by an existing technique such as lathing. As shown in Figure 6B as another example, the metal substrate 11 may have a seam dividing the metal substrate 11 in the peripheral direction. In this case, the manufacturing cost of the sliding member 10 can be cut as compared with the manufacturing cost of the sliding member 10 manufactured from the seamless metal substrate 11. For example, the cylindrical metal substrate 11 having the seam can be manufactured by curling a metal plate material into a ring. The material of the metal substrate 11 has such strength and shape stability as to be used as a back metal base material of a bearing, the material of the metal substrate 2 is not particularly limited, but may be, for example, low-carbon steel (SPCC, SS400, or the like) or a copper-plated steel plate, in which a Fe-based plate material is plated with Cu.

The porous layer 12 has a seamless cylindrical shape, and is formed by sintering metal powder (the mixed powder described below or alloy powder into which the mixed powder is formed during the spraying thereof) on the surface of the metal substrate 11. The thickness of the porous layer 12 may be such a thickness that two or more metal powder particles can be stacked and sintered, for example, a thickness of 0.5 mm or less.

The porous layer 12 is impregnated with a resin composition at a predetermined thickness, followed by firing the resin composition with which the porous layer 12 is impregnated to form the sliding layer 13. Since the porous layer 12 is seamless, no seam appears on the sliding layer 13 covering the porous layer 12, either. The thickness of the sliding layer 13 (the thickness from the surface of the metal substrate 11) may be set at a higher value on average than the thickness of the porous layer 12 so that the porous layer 12 is not exposed. The thickness ratio of the porous layer 12 to the sliding layer 13 may be 6:4 to 8:2, for example, 7:3.

The resin composition of the sliding layer 13 contains a fluorine resin as the main ingredient. As the fluorine resin to be the base resin of the resin composition, for example, PTFE (polytetrafluoroethylene), PFA (perfluoroalkoxy alkane), FEP (perfluoroethylene-propene copolymer), EFFE (ethylene-tetrafluoroethylene copolymer), and the like may be used.

The resin composition may contain PTFE, which is a fluorine resin, as the main ingredient and contain another fluorine resin such as PFA than PTFE as an additive optionally. The content of the other fluorine resin contained as the optional component may be 0% by volume or more and 20% by volume or less of the resin composition.

Examples of commercial PTFE rein include POLYFLON(R) D-210C and F-201 (available from DAIKIN INDUSTRIES, LTD.), Fluon (R) AD911D (AGC Inc.), and Teflon(R) 31JR and 6C-J (Chemours-Mitsui Fluoroproducts Co., Ltd.).

As shown in Figure 3, hard particle powder 13a containing a Laves phase constituted of a composition of Co, Mo, and Si may be dispersed in the resin composition of the sliding layer 13. Here, the Laves phase is an intermetallic compound based on an $AB_2$ type wherein the $AB_2$ type comprises an A element and a B element, and the atom radius ratio A to B is around 1.2:1, and includes three structures, namely a $MgZn_2$ (C14) type, a $MgCu_2$ (C15) type, and a $MgNi_2$ (C36) type. The Laves phase constituted of a composition of Co, Mo, and Si (more specifically, $Co_3Mo_2Si$) is a Laves phase in which the A element is Mo, the B element is Co, and 25 at% of the Co is substituted with Si, and is of the $MgZn_2$ type, having a hexagonal crystal structure. The Vickers hardness of the Laves phase constituted of $Co_3Mo_2Si$ is 1000 to 1200 Hv. Although it is conceivable that the hard particle powder 13a dispersed in the sliding layer 13 receives a higher load than the resin composition forming the sliding layer 13, the hard Laves phase constituted of a composition of Co, Mo and Si can be deposited on the frictional surface to support the load, resulting in acting on a reduction in the abrasion of the sliding layer 13 advantageously.

Mo in the Laves phase and S in lubricating oil can form a sulfide film of $MoS_2$ on the frictional surfaces. $MoS_2$ is a material known as a sulfide that contributes to improvement in frictional characteristics instead of the solid lubricity of lead. Since a bond between sulfur atoms is weaker than a bond between molybdenum atoms and a bond between a molybdenum atom and a sulfur atom, friction selectively cleaves bonds between sulfur atoms, this leads to lubrication, which can act on abrasion suppression effectively. A Mo oxide generated on the frictional surface by the oxidation of Mo in the Laves phase during the sliding also exhibits a lubrication effect, and can act on abrasive suppression effectively.

One or more of molybdenum disulfide ($MoS_2$) powder and bronze powder not containing a Laves phase may be further dispersed in the resin composition of the sliding layer 13. As described above, $MoS_2$ is a material known as a sulfide that exhibits solid lubricity instead of lead to contribute to improvement in friction characteristics. Since bonds between sulfur atoms are weaker than bonds between molybdenum atoms or bonds between molybdenum atoms and sulfur atoms, the friction of $MoS_2$ selectively breaks bonds between sulfur atoms, resulting in lubrication, so that $MoS_2$ can act on the suppression of the abrasion effectively.

As one variation, the resin composition of the sliding layer 13 may comprise copper sulfide (CuS), a thermoplastic resin, molybdenum disulfide ($MoS_2$), graphite, and aramid fiber, with the balance being a fluorine resin (however, the resin composition does not contain lithium phosphate). In this case, the resin composition of the sliding layer 13 may contain more than 3% by mass and less than 40% by mass of the copper sulfide, 0% by mass or more and less than 4% by mass of the thermoplastic resin, 0% by mass or more and 36% by mass or less of the molybdenum disulfide, 0% by mass or more and 10% by mass or less of the graphite, and 0% by mass or more and 10% by mass or less of the aramid fiber, with the balance being the fluorine resin.

Since the resin composition forming the sliding layer 13 contains copper sulfide as a metal sulfide, the sliding layer 5 has improved heat radiation characteristics. This suppresses the temperature rise of the sliding layer 5 due to the sliding of the object to be slid to inhibit the sliding layer 5 from deforming accompanying the temperature rise.

Since the resin composition for forming the sliding layer 13 contains copper sulfide as the metal sulfide, the sliding layer 13 has improved strength. It is known that if a resin composition for forming a sliding layer contains a carbon fiber filler, the resin layer has improved strength. Meanwhile, even though a resin composition does not contain a carbon fiber filler, the resin composition containing copper sulfide improves the strength in the same way as a resin composition containing a carbon fiber filler. Improvement in the strength of the sliding layer 13 suppresses the deformation of the sliding layer 5 due to the sliding of the object to be slid.

If the sliding layer 13 deforms greatly, the abrasion loss is greater than if the sliding layer 13 scarcely deforms. If the sliding layer 13 is inhibited from deformation, the abrasion of the sliding layer 13 is therefore suppressed, resulting in improvement in abrasion resistance characteristics. Improvement in the strength of the sliding layer 13 also suppresses the abrasion. The suppression of abrasion of the sliding layer 13 inhibits the porous layer 12 from being exposed to enable controlling dry touch, which is a direct contact between the porous layer 12 and the object to be slid, and leads to seizure, so that the seizure resistance is improved.

Examples of known copper sulfide include copper(I) sulfide ($Cu_2S$) and copper(II) sulfide (CuS). Copper (I) sulfide ($Cu_2S$) is stable even at 1000°C or more. Meanwhile, copper(II) sulfide (CuS) changes into copper(I) sulfide ($Cu_2S$) at around 200°C. If polytetrafluoroethylene is used as the resin, in the step of forming the sliding layer 13 by firing, a resin composition 4 is heated at more than 327°C. If the resin composition contains copper(II) sulfide (CuS), in the step of forming the sliding layer 13 by firing, the copper(II) sulfide (CuS) therefore changes into copper(I) sulfide ($Cu_2S$).

Copper(I) sulfide ($Cu_2S$) is therefore contained in the sliding layer 13 of the manufactured resultant sliding member 10. Although copper(I) sulfide ($Cu_2S$) or copper(II) sulfide (CuS) may be used as the raw material for the copper sulfide, it is preferable from the viewpoint of processability to use copper(II) sulfide (CuS).

If molybdenum disulfide as the metal sulfide is further incorporated into the resin composition for forming the sliding layer 13, the sliding layer 13 has improved sliding characteristics to the object to be slid in contact with the sliding layer 5. The incorporation of graphite into the resin composition 4 also improves the sliding characteristics. This enables the sliding member having a composition not containing lead (Pb) to exhibit sliding characteristics equivalent to the sliding characteristics of a sliding member containing Pb. Hereinafter, the resin composition of the sliding layer 13 according to one variation will be described in detail.

[Copper sulfide: more than 3% by mass and less than 40% by mass]

In order to improve the heat radiation characteristics and the strength, the resin composition for forming the sliding layer 13 preferably contains copper sulfide at more than 8% by mass and less than 40% by mass. If the amount of copper sulfide added is 3% by mass or less or 40% by mass or more, the heat radiation characteristics are deteriorated, resulting in the inhibition of the abrasion resistance characteristics. Examples of commercial items include copper(II) sulfide (CuS) available from TERADA YAKUSEN, Inc., copper(II) sulfide (CuS) available from KANTO CHEMICAL CO.,INC., and copper(I) sulfide ($Cu_2S$) available from Kojundo Chemical Lab. Co., Ltd.

[Plastic resin: 0% by mass or more and 4% by mass or less]

In the resin composition of the sliding layer 13 according to the one variation, the thermoplastic resin is not an essential additive, but the thermoplastic resin is preferably added since the addition of the thermoplastic resin enables the sliding layer 13 to improve in abrasion resistance and creep resistance characteristics, in which the fluorine resin is poor.
The addition of the thermoplastic resin at more than 4% by mass inhibits the low-friction characteristics of the fluorine resin. Examples of commercial PPS resin as the thermoplastic resin include PQ-208, which is available from DIC Corporation, and Fortron(R) KPS, which is available from KUREHA CORPORATION.

[Graphite: 0% by mass or more and 10% by mass or less]

In the resin composition of the sliding layer 13 according to the one variation, graphite is not an essential additive, but can be expected to contribute to low-friction characteristics and abrasion resistance characteristics. Furthermore, graphite is excellent in cavitation resistance, and can expectedly prevent the resin film from being eroded due to cavitation in the presence of lubricating oil. The addition of graphite at more than 10% by mass inhibits the low-friction characteristics. Examples of commercial graphite include UCP and CPB, which are available from Nippon Graphite Industries, Co., Ltd., and the AT Series, which is available from Oriental Sangyo Co., Ltd.

[Molybdenum sulfide: 0% by mass or more and 36% by mass or less]

In the resin composition of the sliding layer 13 according to the one variation, molybdenum disulfide ($MoS_2$) is not an essential additive, but the addition thereof enables reducing the frictional resistance.
If the amount of molybdenum disulfide added exceeds 36% by mass, in the step of impregnating the porous layer, the impregnatability is deteriorated. Examples of commercial molybdenum disulfide include H/G $MoS_2$, which is available from TAIYO KOKO CO., LTD., and the molybdenum disulfide powder series, which is available from Daizo Corporation.

[Aramid fiber: 0% by mass or more and 10% by mass or less]

In the resin composition of the sliding layer 13 according to the one variation, aramid fiber is not an essential additive, but is added to obtain the mechanical strength. The addition of aramid fiber at 10% by mass or more inhibits uniform dispersion, so that the abrasion resistance characteristics are deteriorated. Examples of commercial aramid fiber include Kevlar(R), which is available from DU PONT-TORAY CO., LTD., and Twaron (R) of TEIJIN LIMITED.
As another variation, the resin composition of the sliding layer 13 may contain any of zinc compounds (ZnS (zinc sulfide), ZnO (zinc oxide), $ZnSO_4$ (zinc sulfate), and the like), carbon fiber, iron oxide, barium sulfate, aramid fiber, graphite, calcium compounds ($CaCO_3$ (calcium carbonate), $CaSO_4$ (calcium sulfate), Ca $(OH)_2$ (calcium hydroxide), and the like), zinc, zinc alloys or a plurality thereof as an optional additive or optional additives. Incorporating a zinc compound into the resin composition enables improving the elastic modulus to suppress the deformation of the sliding layer 13 due to external force, resulting in suppressing an increase or a decrease in the contact area. Incorporating carbon fiber into the resin composition enables improving the value of the kinetic frictional force and change in the static frictional force and the kinetic frictional force, resulting in improvement in sliding characteristics. Incorporating iron oxide into the resin composition enables improving the elastic modulus in addition to the abrasion resistance. Incorporating barium sulfate or aramid fiber into the resin composition enables enhancing the abrasion resistance without inhibiting the addition of a zinc compound from improving the elastic modulus. Incorporating graphite into the resin composition enables reducing the frictional resistance without inhibiting the addition of a zinc compound from improving the elastic modulus. Incorporating a calcium compound, zinc, or a zinc alloy into the resin composition enables improving the abrasion resistance without inhibiting the addition of a zinc compound from improving the elastic modulus.
As one variation, the porous layer 12 may have a matrix phase containing Cu and Sn and hard particles dispersed in the matrix phase. The alloy powder into which the mixed powder is formed during the spraying of the mixed powder may be sintered into the porous layer 12. The formation of the mixed powder into the alloy powder promotes the sintering of the powder to form necks, resulting in bonding the powders sufficiently. The formation of the mixed powder into the alloy powder also micronizes the hard particles and disperses the hard particles in the matrix phase uniformly. If the hard particle powder 13a is dispersed in the sliding layer 13 described above, the porous layer 13 may not contain the hard particles.

The matrix phase is a bronze-based alloy containing Cu as the main ingredient and further containing Sn. The matrix phase may be constituted of a solid solution of Cu, Sn, and Ni.

Bi particles may be distributed on the crystal grain boundary of the matrix phase. In this case, when Bi exhibits self-lubrication action on the frictional surface to which the porous layer 3 is partially exposed by the abrasion of the sliding layer 4 in the same way as Pb of the conventional lead bronze, and functions as a lubricant between the two rubbed surfaces, the friction can be reduced.

The hard particles may contain a Laves phase constituted of a composition of Co, Mo, and Si. It is conceivable that if the sliding layer 13 is abraded, resulting in partial exposure of the porous layer 12, the hard particles dispersed in the matrix phase receive a higher load than soft bronze that is the matrix phase. The hard Laves phase constituted of a composition of Co, Mo, and Si is deposited on the frictional surface to support the load, so that the hard particles can however act on a reduction in the abrasion of the porous layer 12 advantageously. Mo in the Laves phase and S in the lubricating oil can form a sulfide film of $MoS_2$ on the frictional surfaces. $MoS_2$ is a material known as a sulfide that contributes to improvement in frictional characteristics instead of the solid lubricity of lead. Since a bond between sulfur atoms is weaker than a bond between molybdenum atoms and a bond between a molybdenum atom and a sulfur atom, friction selectively cleaves bonds between sulfur atoms, leading to lubrication, which can act on the abrasion suppression effectively. Mo oxide generated on the frictional surface by the oxidation of Mo in the Laves phase during the sliding also exhibits a lubrication effect, and can act on the abrasive suppression effectively.

If the porous layer 12 contains the hard particles, for example, the content of the hard particles may be 40% by mass or less per 100% by mass of the whole porous layer 12. The content of the hard particles may be, for example, 0.1% by mass or more per 100% by mass of whole porous layer 12. If the content of the hard particles is 0.1% by mass or more, the hard particles exhibit the effect of reducing the abrasion of the porous layer 12 as described above. The content of the Laves phase constituted of a composition of Co, Mo, and Si may be, for example, 0.1 to 20% by mass per 100% by mass of the whole porous layer 12. If the hard particle powder 13a is dispersed in the sliding layer 13 described above and the porous layer 12 does not contain the hard particles, the total content of Cu and Sn may be 99.9% or more per 100% by mass of the whole porous layer 12.

The <u>porous layer 3</u> may further have compound phases dispersed in the matrix phase. The compound phases may contain Co, Fe, Ni, Si, and Cr. The formation the compound phases in the matrix phase enables enhancing the hardness of the matrix phase, and enables acting on improvement in the seizure resistance advantageously.

The sliding member 10 according to the present embodiment includes the following four aspects:

(1) an aspect in which the porous layer 12 contains the hard particles, and the sliding layer 13 does not contain the hard particle powder 13a;

(2) an aspect in which the porous layer 12 does not contain the hard particles, and the sliding layer 13 contains the hard particle powder 13a;

(3) an aspect in which the porous layer 12 contains the hard particles, and the sliding layer 13 contains the hard particle powder 13a; and

(4) an aspect in which the porous layer 12 does not contain the hard particles, and the sliding layer 13 does not contain the hard particle powder 13a. In any of the aspects (1) to (3) among these, the sum of the content of the hard particles and the content of the hard particle powder 13a may be 1 to 20% by mass, for example, 15% by mass, per 100% by mass of the combination of the porous layer 12 and the sliding layer 13 (namely the balance obtained by excluding the metal substrate 11 from the whole sliding member 10).

According to the present embodiment as mentioned above, the sliding member 10 has no seam on the porous layer 12, and therefore no seam appears on the sliding layer 13 covering the porous layer 12, which reduces friction on the seam and heat generation due to the friction. This enables improving the abrasion resistance and the seizure resistance in the high-speed rotational region and also improving performance as a bearing.

According to the present embodiment, the porous layer 12 has no seam, and therefore no seam appears on the sliding layer 13 covering the porous layer 12, which reduces torque generated by friction on the seam. This contributes to a decrease in power consumption, and reduces energy loss. Accordingly, this can contribute to carbon neutral.

Conventional rolling bearings that are used at high rotational speed in EV motors and electric compressors can be replaced with the sliding member 10 of the present embodiment, resulting in the downsizing and the weight saving.

Furthermore, if conventional sliding members having seamed sliding surfaces are applied to motors or compressors, a step of cutting the inner surface (aligning the inner surfaces on the seam portion) is necessary. Meanwhile, the sliding member 10 according to the present embodiment has no seam on the porous layer 12, and therefore no seam appears on the sliding layer 13 covering the porous layer 12, which enables omitting the step of cutting the inner surface.

The omission of the step enables reducing industrial waste (carbon contained in resin compositions) to be generated during the cutting, and can therefore contribute to carbon neutral.

<Method for manufacturing sliding member>

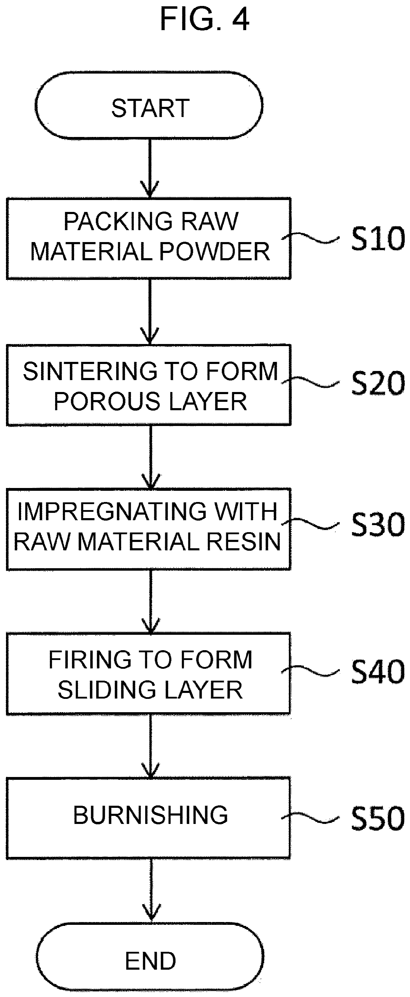

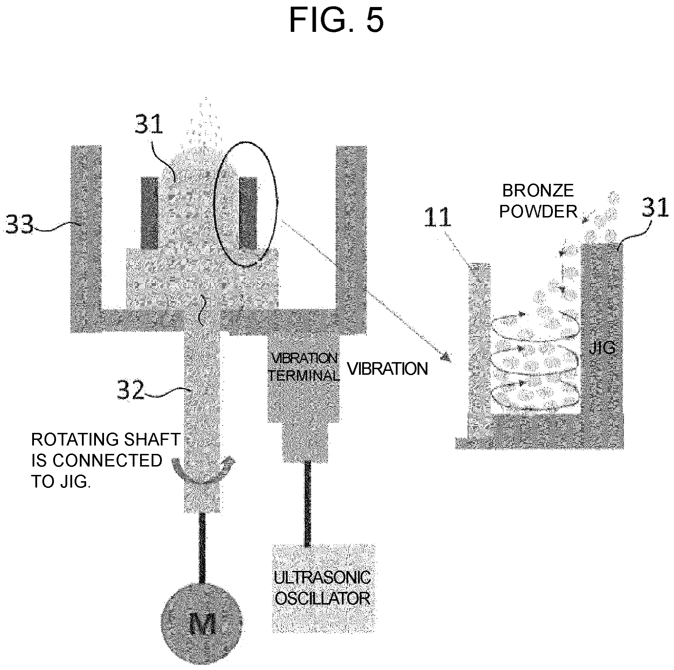

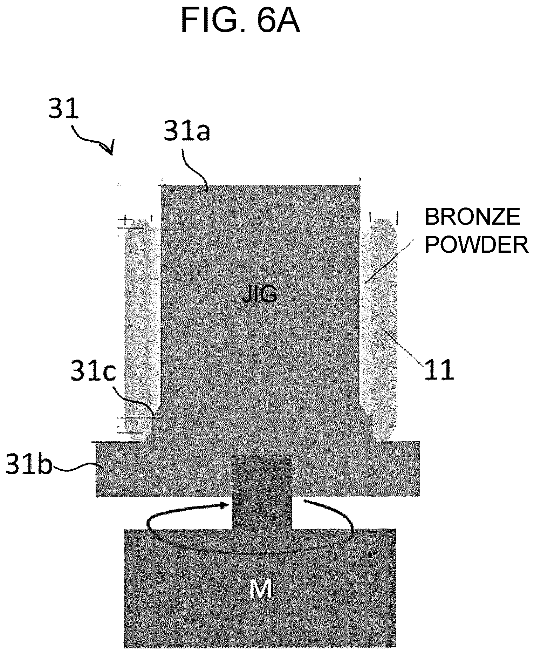

A method for manufacturing the sliding member 10 will then be described with reference to Figure 4. Figure 4 is a flow chart showing one example of a method for manufacturing the sliding member 10. Figure 5 illustrates the step of packing raw material powder. Figure 6A illustrates the shape of a jig 31 for the step of packing the raw material powder.

As shown in Figures 4 to 6A, a columnar or cylindrical jig 31 is first disposed inside a cylindrical metal substrate 11, followed by packing raw material powder of a porous layer 12 into the space between the inner peripheral surface of the metal substrate 11 and the outer peripheral surface of the jig 31 (step S10).

In the example shown in Figure 6A, the jig 31 has a columnar or cylindrical body 31a and a base 31b disposed on an end of the body in the axial direction thereof. A step 31c protruding radially and outward may be disposed on the end of the body 31a adjacent to the base 31b. In this case, the top of the step 31a contacts with the inner peripheral surface of metal substrate 11 to facilitate locating the metal substrate 11 so that the metal substrate 11 is concentric with the body 31a of the jig 31 upon the disposition of the body 31a of the jig 31 inside the metal substrate 11.

Figure 6B illustrates a step of packing raw material powder in the case of a metal substrate 11 having a seam. As shown in Figure 6B, in the case of the metal substrate 11 having a seam, the metal substrate 11 is first press-fitted inside a cylindrical housing 34 to allow portions to be seamed of the metal substrate 11 to be in close contact with each other. A jig 31 is then concentrically disposed inside the metal substrate 11 press-fitted inside the housing 34, followed by packing raw material powder of a porous layer 12 into an annular space between the inner peripheral surface of the metal substrate 11 and the outer peripheral surface of the jig 31. The raw material powder is packed into the annular space with the portions to be seamed of the metal substrate 11 in close contact with each other, which prevents the formation of a seam such as a level difference on the inner peripheral surface of the porous layer 12 to be formed by sintering.

As shown in Figures 5 and 6A, a rotating shaft 32 is connected to the base 31b of the jig 31. While the jig 31 is rotated with a motor connected to the rotating shaft 32, the raw material powder of the porous layer 12 may be sprinkled from above the jig 31 to be dropped and packed into the space between the inner peripheral surface of the metal substrate 11 and the outer peripheral surface of the jig 31. This enables enhancing the fluidity of the raw material powder which is packed into the space to improve the packing density.

As shown in Figure 5, the vibration terminal of an ultrasonic oscillator is connected to a work 33 supporting the jig 31. While ultrasonic waves are applied to the jig 31 through the work 33, the raw material powder of the porous layer 12 may be sprinkled from above the jig 31 to be dropped and packed into the space between the inner peripheral surface of the metal substrate 11 and the outer peripheral surface of the jig 31. This also enables enhancing the fluidity of the raw material powder which is packed into the space to improve the packing density.

The raw material powder may be a first powder containing Cu and Sn; a mixed powder in which the first powder and hard particle powder containing a Laves phase constituted of a composition of Co, Mo, and Si are mixed; or a mixed powder in which a second powder containing Cu, Co, Fe, Ni, Si, and Cr is further mixed with the first powder and the hard particle powder.

Here, the first powder is a bronze-based alloy powder containing Cu as the main ingredient and further containing Sn. The first powder may further contain Bi or P. If the first powder contains Bi, Bi particles are deposited in a matrix phase 10 at the time of the sintering of the raw material powder described below (namely, step S11), Bi exhibits self-lubrication action in the same way as Pb in the conventional lead bronze, friction can therefore be reduced. If the first powder contains P, oxygen contained in copper can be removed (deoxidized) to suppress hydrogen embrittlement. The contents of the constituent elements of the first powder may be Sn: 10 to 11% by mass and Cu: the balance. If the first powder further contains Bi, Bi: 7 to 9% by mass. If the first powder contains P, it is preferable that P: 0.02% by mass or less. The amount of the first powder blended in the raw material powder is the amount of the balance obtained by deducting the total amount of powders blended other than the first powder from the amount of the whole raw material powder blended.

The hard particle powder is an alloy powder containing a Laves phase constituted of a composition of Co, Mo, and Si and Cu, and is a hard particle powder containing Cu, Si, Fe, Mo, Co and Cr. The hard particle powder may further contain Sn, and for example, may contain Sn at 1% by mass or more. The solid phase temperature of the hard particle powder not containing Sn reaches around 1450°C, but the incorporation of Sn enables reducing the solid phase temperature of the hard particle powder, and enables solid phase-sintering the hard particle powder on a back metal base material at around 800°C. Sn contained in the hard particle powder is dissolved on a Cu-Sn matrix phase side formed by the first powder for diffusion bonding at the time of sintering. The progress of the sintering due to the powdery shrinkage through Sn enables exhibiting solid solution strengthening by Sn in the matrix phase and Sn contained in the hard particle powder. The contents of the constituent elements in the hard particle powder may be Co: 14 to 20% by mass, Mo: 24 to 28% by mass, Si: 3 to 7% by mass, Fe: 2 to 16% by mass, Cr: 1 to 10% by mass, and Cu: the balance, per 100% by mass of the whole hard particle powder. If the hard particle powder contains Sn, the contents of the constituent elements in the hard particle powder may be Co: 14 to 20% by mass, Mo: 24 to 28% by mass, Si: 3 to 7% by mass, Fe: 2 to 16% by mass, Cr: 1 to 10% by mass, Sn: 1 to 15% by mass, and Cu: the balance with the content of the whole hard particle powder defined as 100% by mass. The amount of the hard particle powder blended may be 1 to 40% by mass, and is preferably 1 to 3% by mass, per 100% by mass of the whole raw material powder (namely, 100% by mass of the whole sliding layer 12). Since Cu and Sn are molten out of the hard particle powder during the sintering, the content of the hard particles in the sliding layer 12 varies from the amount of the hard particle powder blended in the raw material powder.

The second powder is an alloy powder containing Cu as the main ingredient and further containing Co, Fe, Ni, Si, and Cr. The second powder may further contain Sn, and, for example, may contain Sn at 1% by mass or more. The solid phase temperature of the second powder not containing Sn reaches around 1240°C, but the incorporation of Sn enables reducing the solid phase temperature of the second powder, and enables solid phase-sintering the second powder on the back metal base material at around 800°C. If the second powder contains Sn, the contents of the constituent elements in the second powder may be Co: 0.6 to 4.6% by mass, Fe: 1.6 to 5.6% by mass, Ni: 10 to 14% by mass, Si: 0.5 to 4.5% by mass, Cr: 0.5 to 1.5% by mass, Sn: 1 to 15% by mass, and Cu: the balance with the content of the whole second powder defined as 100% by mass. If the second powder is contained in raw material powder, the amount of the second powder blended may be 2 to 38% by mass, and is preferably 10 to 38% by mass and more preferably 17 to 19% by mass with the content of the whole raw material powder defined as 100% by mass.

The amount of the hard particle powder blended is 1 to 40% by mass, and the amount of the second powder blended may be 15 to 18% by mass, per 100% by mass of the whole raw material powder. In this case, excellent shearing workability can be achieved.

The first powder, the hard particle powder, and the second powder can each be produced, for example, by spraying using gas atomization. In the gas atomization, the heat source for melting may be high-frequency waves, and zirconia may be used for the crucible (with a nozzle attached to the bottom).

For example, the grain diameter of the first powder may be 45 $\mu$m to 180 $\mu$m. The hard particle powder may be fine powder having a grain diameter of 53 $\mu$m or less. The grain diameter of the second powder may be 53 $\mu$m to 150 $\mu$m. Here, the "grain diameter" refers to particle size distribution measured by laser diffraction/scattering using the particle size distribution measuring apparatus MT3300EXII, manufactured by MicrotracBEL Corp. This measuring method is a measuring method according to the test procedure including the step of extracting powder from paste and the following in "4.2.3 Laser diffraction grain size distribution measurement test" of JIS Z3284-2.

Alloy powder into which the mixed powder is formed by atomization treatment during spraying may be sprinkled from above the jig 31 to be packed into the space between the inner peripheral surface of the metal substrate 11 and the outer peripheral surface of the jig 31.

The metal substrate 11 is then placed into a heating furnace, followed by sintering the raw material powder at 800 to 900°C to form the seamless porous layer 12 comprising a metal simple substance or an alloy composition on the inner peripheral surface of the metal substrate 11 (step S20). In step S20, the jig 31 may be separated from the rotating shaft 32, followed by placing the metal substrate 11 with the jig 31 into a heating furnace to sinter the raw material powder. If the metal substrate 11 is used having the seam, the metal substrate 11 with the jig 31 and the housing 34 may be placed into a heating furnace to sintering the raw material powder.

As described above, the solid phase temperatures of the hard particle powder not containing Sn and the second powder reach around 1450°C and 1240°C, respectively, but the incorporation of Sn enables reducing the solid phase temperatures of the hard particle powder and the second powder, and enables solid phase-sintering the hard particle powder and the second powder on the metal substrate 11 (back metal base material) at around 800°C. Sn contained in the hard particle powder is dissolved in the Cu-Sn matrix phase side formed by the first powder during sintering for diffusion bonding. The progress of the sintering due to powdery shrinkage through Sn exhibits solid solution strengthening by Sn in matrix phase and Sn contained in the hard particle powder, and enables forming an alloy having high strength finally.

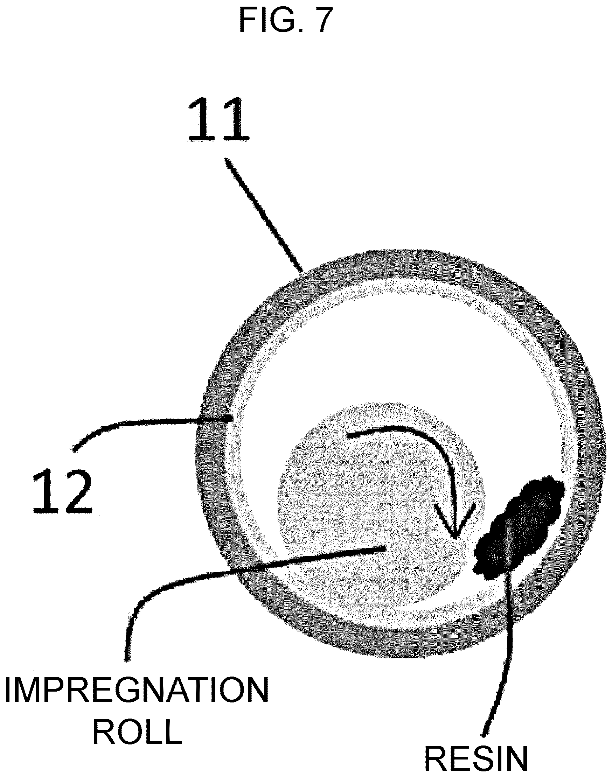

The surface of the porous layer 12 is then impregnated with raw material resin of a sliding layer 13 (step S30). As shown in Figure 7, for example, a predetermined amount of a resin composition is specifically fed to the porous layer 12 formed on the inner peripheral surface of the metal substrate 11 and pressed against the porous layer 12 by rotational pressure from an impregnation roll, so that the porous layer 12 is impregnated with the resin composition. One or more of the hard particle powder 13a containing a Laves phase constituted of a composition of Co, Mo and Si and molybdenum disulfide ($MoS_2$) powder may be dispersed in the resin composition to be fed onto the porous layer 3. As one variation, the resin composition contains copper sulfide as an additive, may further contain molybdenum disulfide, and may contain graphite and aramid fiber as other additives. The resin composition is fed onto the porous layer 12 in such an amount that the sliding layer 13 covers the porous layer 12 at such thickness that the porous layer 12 is not exposed from the surface of sliding layer 13 after the below-described firing of the resin composition.

The resin composition is then heated at temperature higher than the melting point of the resin contained in the resin composition, so that the organic solvent is volatilized while the resin is molten. The resin is then cured to form a sliding layer 13 comprising the resin composition and covering the porous layer 12 (step S40). The heating the resin composition at a predetermined temperature to form the sliding layer 13 is referred to as firing. Note that the polytetrafluoroethylene for the resin has a melting point of 327°C. The resin composition may be heated at temperature exceeding the melting points of the polytetrafluoroethylene (for example, 400 to 500°C) with a firing furnace to fire the sliding layer 13.

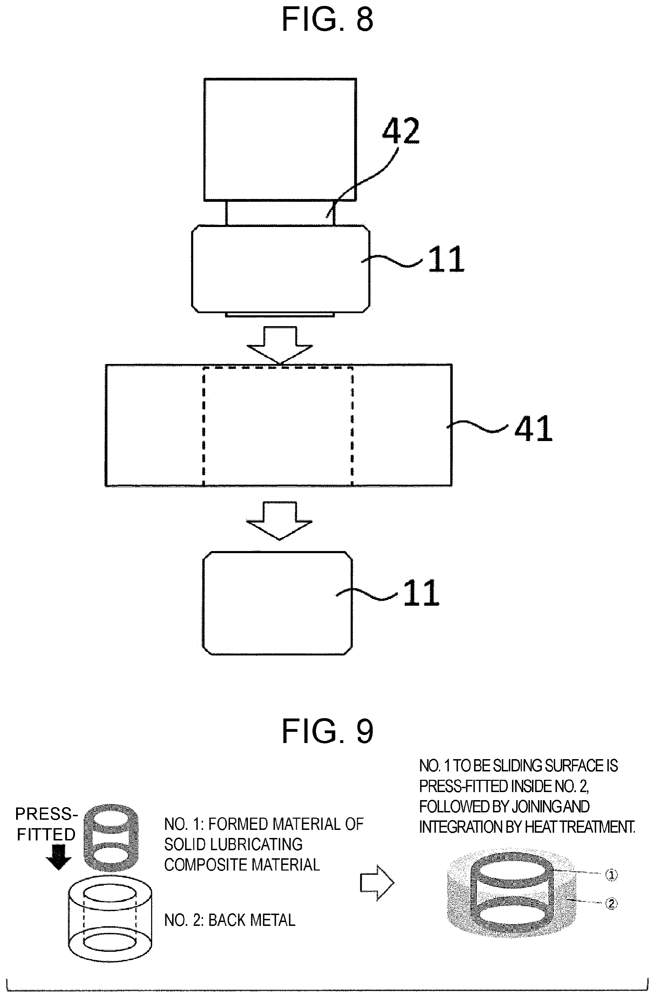

With reference to Figure 8, while the outer peripheral surface of the metal substrate 11 is then held with a die 41, a columnar cored bar 42 is pressed inside the sliding layer 13 for burnishing the inner peripheral surface of the sliding layer 13, resulting in the reduction of the inner diameter circularity to 50 $\mu$m or less (step S50). The sliding member 10 having the configuration described above (refer to Figure 1 to Figure 3) is manufactured thereby.

As shown in Figure 9, as one example for comparison with the method for manufacturing the sliding member 10, conceivable is a method involving impregnating the inner peripheral surface of a porous sintered layer formed in a cylindrical shape with a resin composition to manufacture a composite formed material comprising the porous sintered layer and the resin composition, followed by press-fitting the composite formed material inside a seamless cylindrical metal substrate, resulting in joining and integrating the composite formed material and the metal substrate by heat treatment. A strong back metal base metal is however essential for impregnating a thin porous sintered layer having a thickness of 1 mm or less with the resin composition. Without the back metal base metal, the composite formed material is therefore immediately broken or deformed comprising the porous sintered layer and the resin composition. Thus, this method does not enable obtaining the composite formed material comprising the porous sintered layer and the resin composition. Accordingly, the sliding member 10 cannot be obtained having the configuration described above.

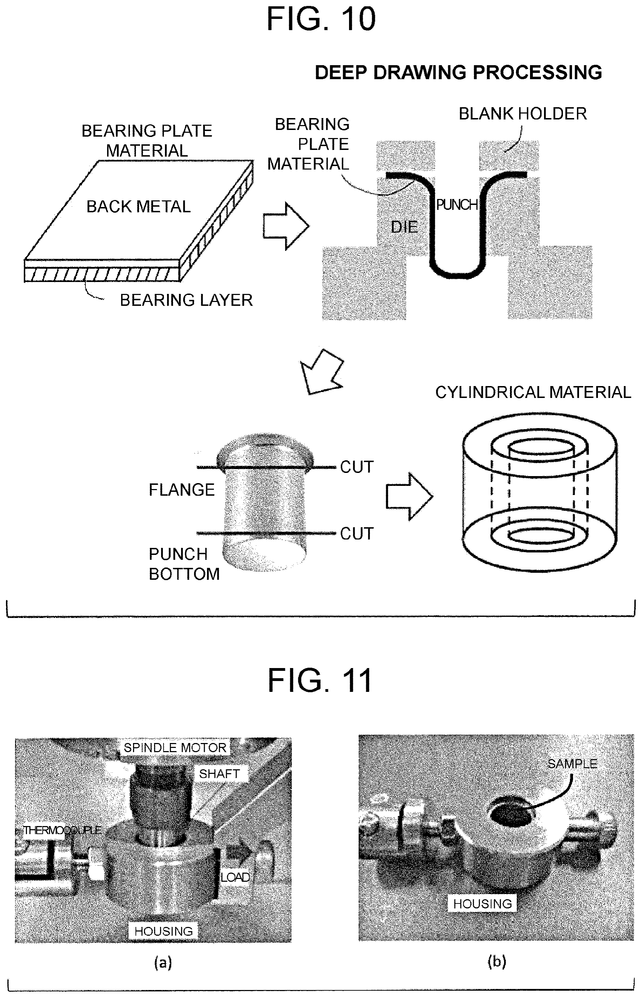

As shown in Figure 10, as another example for comparison with the method for manufacturing a sliding member 10, conceivable is also a method involving sintering raw material powder to form a porous layer on one surface of a metal substrate (back metal) having a flat shape, followed by forming a sliding layer (bearing layer) from the resin composition on the porous layer by firing, resulting in manufacturing a bearing plate material; subsequently deep-drawing the bearing plate material into a cylindrical shape; and then cutting both ends thereof. In this method, the sliding layer comprising the resin composition however cracks or is separated from the porous layer during the deep drawing, so that the sliding member 10 having the configuration described above cannot be obtained.

Examples

Specific examples according to the present embodiment will then be described.

(Manufacturing of sliding members)

Carbon steel round bars were first lathed to an outer diameter of 22 mm, an inner diameter of 20.62 mm, and a total length of 10.35 mm to obtain seamless thin cylindrical metal substrates 11 for Examples 1 to 4. A carbon steel plate material having a length of 67 mm, a width of 11 mm, and a thickness of 0.75 mm was processed into the shape of a wrapped bush to obtain a cylindrical metal substrate 11 having portions to be seamed with a space of 2 mm or less (of a seamed type) for Example 5. A hollow welded steel tube (pipe) may be substituted for the carbon steel round bar.

Coarse powder having a grain size of 150 $\mu$m or more is removed from bronze powder (amorphous, trademark: CP-301) available from FUKUDA METAL FOIL & POWDER CO., LTD. to obtain powder. The obtained powder is then provided as raw material powder of a porous layer 12. The bronze powder has a chemical composition of Cu-10Sn.

In the case of Examples 1 to 4, with reference to Figures 5 and 6A, a carbon steel jig 31 having an outer diameter of 19.96 mm was inserted inside each of the metal substrates 11 having an inner diameter of 20.62 mm, followed by feeding the raw material powder into the space between the inner peripheral surface of the metal substrate 11 and the outer peripheral surface of the jig 31 having a width of 0.3 mm. The inner diameter of the metal substrate 11 is 20.6 mm, the outer diameter of the jig 31 is 19.96 mm, the total length of the jig 31 is 10.35 mm, and the volume of the powder packed is therefore 0.21 cm$^3$. In the case of Example 5, with reference to Figure 6B, the metal substrate 11 was press-fitted inside a housing 34 to allow portions to be seamed to be in close contact with each other. The carbon steel jig 31 was then concentrically disposed inside the metal substrate 11 press-fitted inside the housing 34, followed by feeding the raw material powder into an annular space between the inner peripheral surface of the metal substrate 11 and the outer peripheral surface of the jig 31 having a width of 0.3 mm. In any of Examples 1 to 5, while the jig 31 was rotated using a motor with a rotating shaft connected to the jig, the powder was packed for improving the fluidity of the powder fed into the space. The raw material powder was sintered in this state in a sintering furnace under conditions of a sintering temperature of 880°C and a conveyer speed of 230 mm/min.

The inside of the cylindrical metal substrate 11 having sintered bronze powder was impregnated with resin. In Examples 1, 2, and 5, the incorporated resin had a composition of graphite powder: 2% by volume; hard particle powder containing a Laves phase constituted of a composition of Co, Mo, and Si: 15% by mass; and PTFE resin as the balance, and MoS$_2$ powder: 15% by mass was further added for improving the self-lubricity. The hard particle powder has a chemical composition of Cu-4.5Sn-5Si-15Fe-16Co-4Cr-26Mo, and is fine powder having a grain size under 53 $\mu$m. The graphite powder is available from Nippon Graphite Industries, Co., Ltd. (trademark: CPBW-5). In Examples 3 and 4, the incorporated resin has a composition constituted of graphite: 4.0% by volume, MoS$_2$: 7.25% by volume, and CuS: 10.95% by volume, and PTFE resin as the balance.

With reference to Figure 7, in the method for impregnating the porous sintered layer 12 with the resin, the resin was applied to the inside of the metal substrate 11 having an outer diameter of 22 mm, an inner diameter of 20 mm, and a total length of 10 mm with a spatula. The porous sintered layer 12 was impregnated with the resin by rolling pressure while the resin is pressed with a rolling cored bar having a diameter of 11.7. The resin was then fired with a firing furnace under the conditions of a firing temperature of 480°C and a conveyer speed 1000 mm/min.

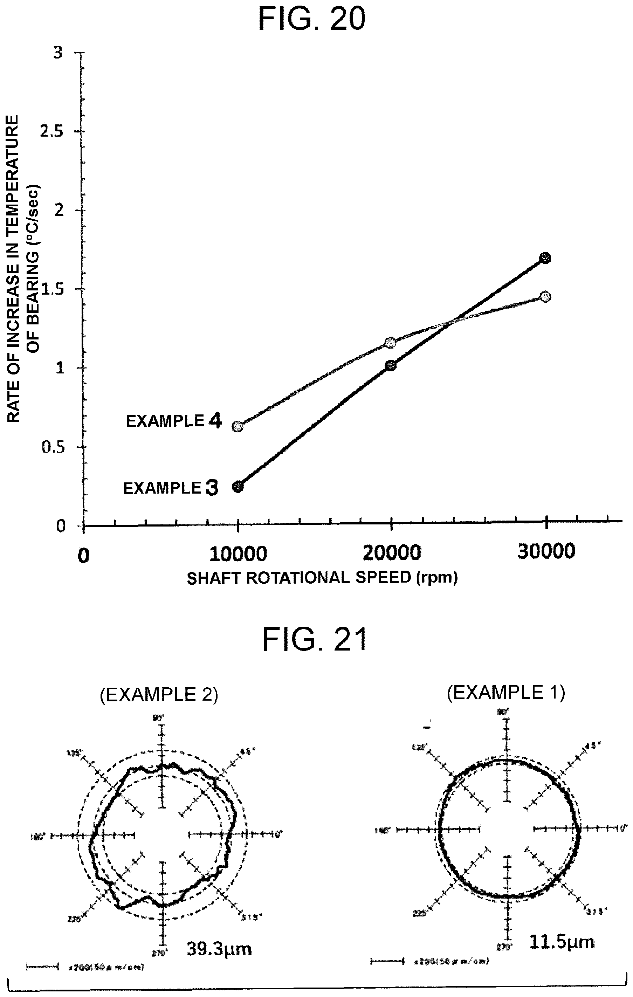

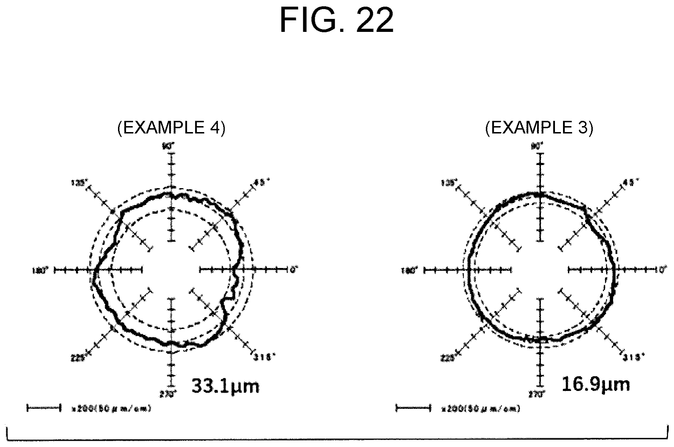

With reference to Figure 8, in Examples 1, 3, and 5, a cored bar 42 having an outer diameter of 12.160 mm was pressed inside the sliding layer 13 with an Amsler tester while the outer peripheral surface of the metal substrate 11 was held with a die 41 having an inner diameter of 14.065 mm. A load was applied to the inner peripheral surface of the sliding layer 13 thereby to modify (burnish) the inner peripheral surface. Figure 21 is graphs showing the inner diameter circularities of the sliding member according to Example 1 (burnished) and the sliding member according to Example 2 (unburnished). Figure 22 is graphs showing the inner diameter circularities of the sliding member according to Example 3 (burnished) and the sliding member according to Example 4 (unburnished). As shown in Figures 21 and 22, it has been confirmed that the burnishing modifies the ellipse to secure a satisfactory circularity of 20 $\mu$m or less.

The same bronze powder as in Examples 1 to 5 was sprinkled on a carbon steel plate material (metal substrate) and sintered to obtain a porous layer as Comparative Example. The porous layer was then impregnated with the same resin as in Examples 3 and 4. The resin was then fired to form a sliding layer covering the porous layer, followed by rolling. Subsequently, the rolled metal substrate was processed into the shape of a wrapped bush with the sliding layer inside to manufacture a sliding member including the metal substrate, the porous layer, and the sliding layer all having a seam.

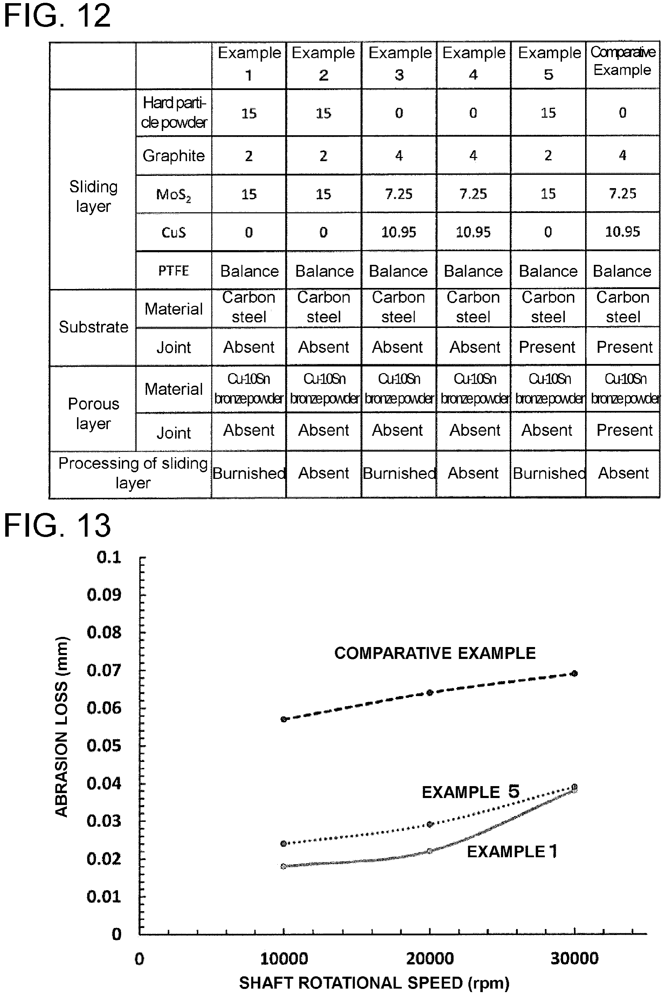

Figure 12 is a table collectively showing the compositions and others of the sliding members according to Examples 1 to 5 and Comparative Example manufactured in the above-described procedure.

(High-speed rotational abrasion test)

The performances of the sliding members of Examples 1 to 5 and Comparative Example were then compared by a high-speed rotational abrasion test. Figure 11 shows a high-speed rotational abrasion tester. This tester measures the temperature on the rear side of a bearing during the application of a load and speed to a test material through the mating shaft, and is suitable for evaluating the abrasion loss or the heat generation mainly in the high-speed region. An oil bath is disposed in the test section. The tester is designed to enable evaluations both in oil and without lubrication. In order to achieve high-speed rotation, a spindle motor (type S262B-SJ03, rated output: 1.2 kW, rated voltage: 200 V, rated current 4.8 A) available from SHIN-OH ELECTRIC CO., LTD. was directly connected to a tip of the mating shaft Φ6h7 through a collet chuck. This designed the tester as an apparatus that enables evaluation at up to 60,000 rpm with accuracy such that the axial runout was 0.002 mm or less. The spindle motor is water-cooled at a flow rate of 0.7 L/min through a chiller.

The mating shaft has an outer diameter of 11.957 to 11.975 mm, and the housing has an inner diameter of 14.000 to 14.018 mm. The materials of both are SKD-11, and the hardness after full hardening is HRC58. The temperature on the rear side of the bearing was measured at a point 1.5 mm away from the rear side of the bearing using a data logger every second while a thermocouple was inserted into a hole having a diameter of 6 mm.

Then, the performance greatly depends on the test conditions, namely whether a bearing section is lubricated or not. For example, in air conditioning compression mechanism such as a car air conditioner compressor, lubricating oil scarcely flows into the bearing under the condition that the orbiting scroll are swirled while the orbiting scroll is strongly pressed against the fixed scroll. Furthermore, higher-speed rotation is essential in driving motors for EVs for balancing the downsizing and weight saving and the output enhancement. Although oil-lubricated bearings and grease-lubricated bearings are adopted as bearings supporting motors, the bearing sections can scarcely be expected to be oil-lubricated due to the simplification of the surrounding structure. The test measured the frictional heat generation and the abrasion loss vs. the rotational speed of the shaft for evaluation without lubrication in view of these practical restrictions and others. The frictional heat generation was analyzed using the rate of increase in the temperature of the bearing as an evaluation index by the regression analysis of the gradient of the temperature on the rear side of the bearing vs. the time elapsed until the temperature reached 120°C. The sliding member was measured for thicknesses before and after the test with a micrometer for pipes, followed by calculation of the abrasion loss from a variation in thickness at the load point.

The main shaft of a compressor is supposed to rotate at a rotational speed of up to 10,000 rpm. The shaft of an EV motor is supposed to rotate at a rotational speed of up to around 30,000 rpm. The three standards were set at 10,000 rpm, 20,000 rpm, and 30,000 rpm in view of this. A unidirectional radial load of 3 N was applied to the bearing in view of the use limit and the safety of the spindle motor rotating at high speed. The shaft was polish-finished to a surface roughness, Ra, of 0.17 $\mu$m with the target value of the clearance between the bearing and the shaft adjusted to 0.1 mm, followed by testing the bearing.

Since the power can be converted into the electrical power, the frictional torque due to the rotational movement can be expressed by the following equation (1):

$$E = P = 2\pi \bullet N \bullet T/60 = 2\pi \bullet N \bullet F \bullet R/60 \ ... \ \text{Equation (1)}$$

wherein R is the radius of gyration (m), F is frictional force (N), N is shaft rotational speed (rpm), T is torque (N•m), E is electrical power (W), and P is power (W).

(Results and discussion)

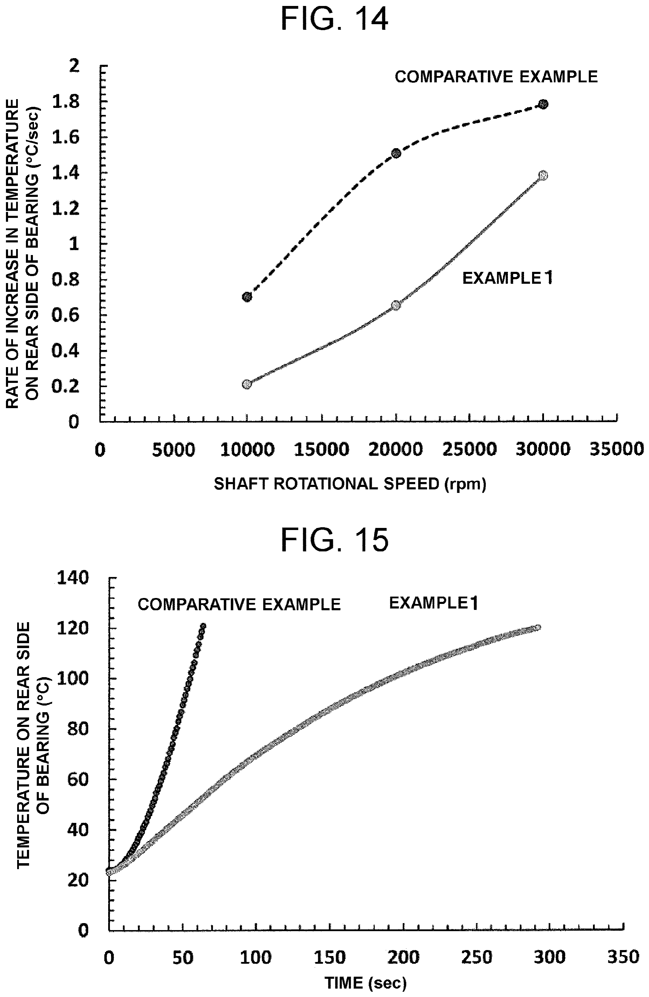

Figure 13 shows a variation in the abrasion loss W vs. the rotational speed without lubrication with respect to the sliding members of Examples 1 and 5 and Comparative Example. Figure 14 shows a variation in the rate of increase in temperature on the rear side of the bearing, T, vs. the rotational speed without lubrication with respect to the sliding members of Example 1 and Comparative Example.

As shown in Figures 13 and 14, it has been observed that the abrasion loss tends to increase with the rotational speed, and the temperature also tends to increase therewith. With respect to the sliding member of Comparative Example, W = 0.06 to 0.07 mm, and T = 0.7 to 1.8°C/sec. Meanwhile, with respect to the sliding member of Example 1, W = 0.02 to 0.04 mm, and T = 0.2 to 1.4°C/sec, which enables confirmation that the sliding member of Example 1 is scarcely abraded, and generates less heat. Also with respect to the sliding member of Example 5, W = 0.02 to 0.04 mm, which enables confirmation that the abrasion loss of Example 1, including the seamless metal substrate 11, is almost equivalent to the abrasion loss of Example 5, including the metal substrate 11 having the seam due to friction.

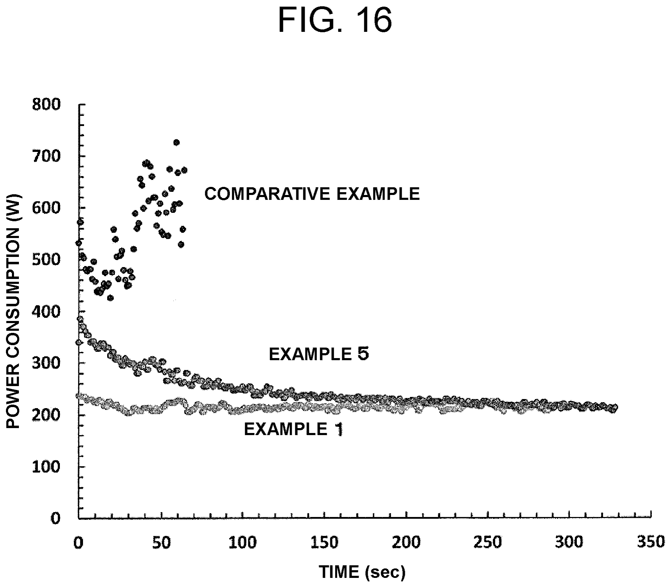

Figure 15 shows variations over time in the temperatures on the rear sides of the bearings, namely the sliding members of Examples 1 and Comparative Example, during the operation thereof at a shaft rotational speed of 30,000 rpm. Figure 16 shows variations over time in the power consumption of the sliding members of Examples 1 and 5 and Comparative Example during the operation thereof at a shaft rotational speed of 30,000 rpm.

As shown in Figures 15 and 16, the sliding member of Comparative Example rapidly increases in temperature from the beginning of the operation, and the power consumption of Comparative Example wildly fluctuates from 400 to 700 W due to friction. Meanwhile, the temperature of the sliding member of Example 1 more gradually increases to 120°C than the temperature of the sliding member of Comparative Example, and the power consumption of the sliding member of Example 1 has a constant value of around 200 W from the beginning. It is conjectured that since the sliding member of Example 1 does not have any protrusion on the inner surface, so that the sliding member avoided local contact with the mating shaft. It can be confirmed that although the power consumption of the sliding member of Example 5 is higher than the power consumption of the sliding member of Example 1 only at the beginning, and then gradually decreases to a constant value, Example 1, not having any seam on the metal substrate 11, is almost equivalent in power consumption due to friction to Example 5, having the seam on the metal substrate 11. It is conjectured that since the sliding member of Example 5 has the seam on the metal substrate 11, heat is likely to be radiated from the frictional surface, so that the power consumption gradually decreases to a constant value.

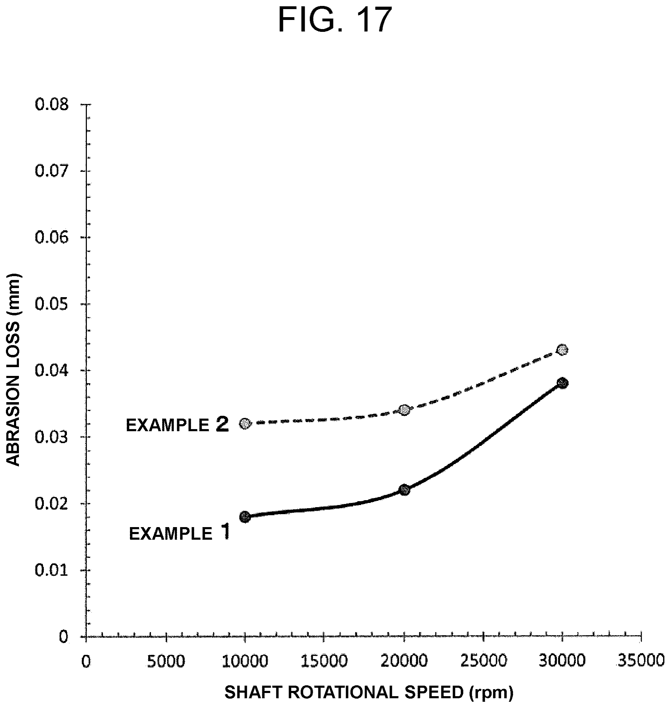

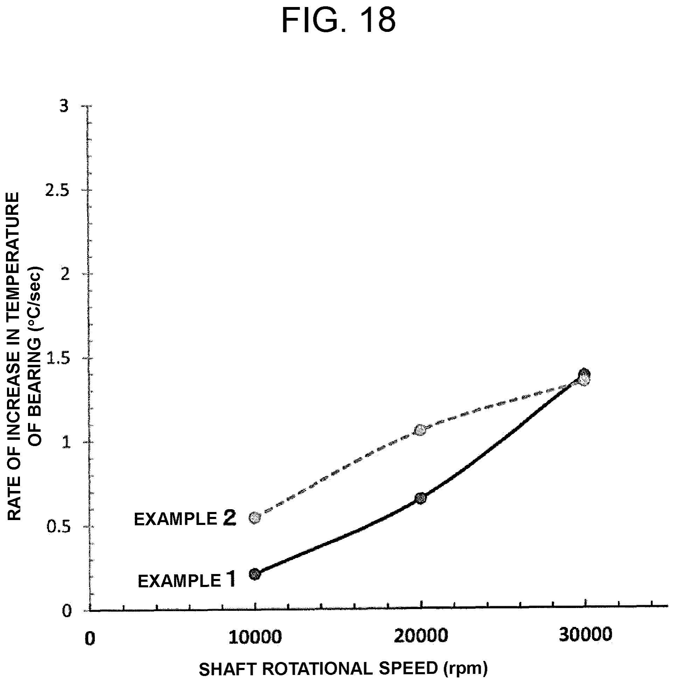

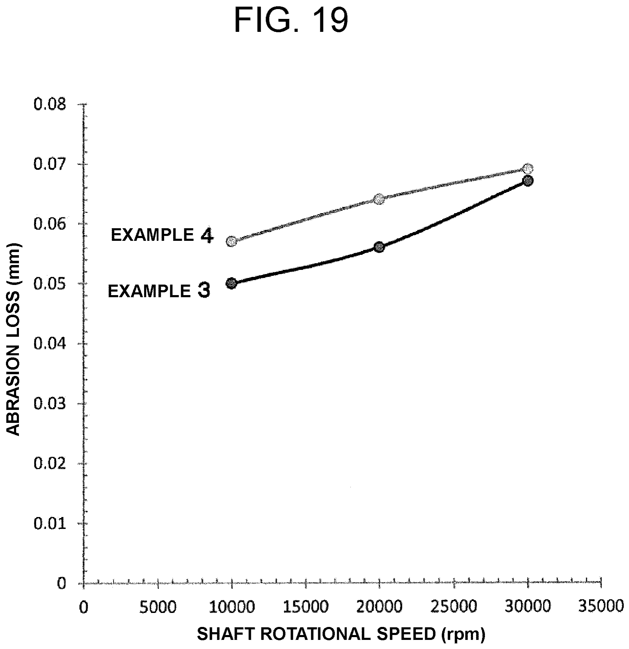

Figure 17 shows a variation in the abrasion losses of the sliding members of Examples 1 and 2 vs. the shaft rotational speed. Figure 18 shows a variation in the rate of increase in temperature on the rear sides of the bearings, namely the sliding members of Examples 1 and 2. Figure 19 shows a variation in the abrasion losses of the sliding members of Examples 3 and 4 vs. the shaft rotational speed. Figure 20 shows a variation in the rate of increase in the temperatures on the rear sides of the bearings, namely the sliding members of Examples 3 and 4.

As shown in Examples 17 to 20, improvement in inner diameter circularity by burnishing reduces the abrasion losses of the sliding members of both Examples 1 and 3 by around 0.01 mm and the rates of increase in temperature thereof by 0.5°C/sec in the high-speed rotational region from 10,000 to 20,000 rpm. Especially Examples 1, containing $MoS_2$, exhibits a higher effect of reducing the abrasion than the other articles. It is conjectured that Co-Mo-Si constituting a Laves phase and $MoS_2$ were added to form a sulfide film even without lubrication, which contributes to a reduction in abrasion.

Meanwhile, if the rotational speed of the shaft reaches around 30,000 rpm, there are observed almost no differences in abrasion and heat generation between the burnished sliding members and the unburnished sliding members. It is conceivable that this results from the shaft vibration as a factor thereof. That is, if the rotational speed of the stationary shaft gradually increases, the shaft vibrates due to unbalance. If the rotational speed of the shaft further increases, the shaft violently vibrates by self-excitation, that is, the shaft revolves within the space inside the bearing while rotating due to whirling. Examples of the factor therefore include the influence of the shaft vibration resulting from an increase in the rotation or a variation in the clearance due to the heat generation.

Although the embodiments and the variations were described above by illustration, the scope of the present technology is not limited to these. The embodiments and the variations can be modified and varied depending on the object within the scope described in claims. As long as the treatment contents do not conflict with each other, the embodiments and the variations can be appropriately combined.

**Claims**

1. A sliding member, comprising:

   a cylindrical metal substrate;
   a seamless porous layer formed on an inner peripheral surface of the metal substrate; and
   a sliding layer covering the porous layer,
   wherein the porous layer is formed of a metal simple substance or an alloy composition, and
   the sliding layer is formed of a resin composition.

2. The sliding member according to claim 1,
   wherein the sliding layer has an inner diameter circularity of 50 $\mu$m or less.

3. The sliding member according to claim 1 or 2,
   wherein a hard particle powder comprising a Laves phase constituted of a composition of Co, Mo and Si is dispersed in the sliding layer.

4. The sliding member according to claim 3,
   wherein one or more of $MoS_2$ powder and bronze powder not comprising a Laves phase are further dispersed in the sliding layer.

5. The sliding member according to claim 1 or 2,
   wherein the resin composition comprises copper sulfide, a thermoplastic resin, molybdenum disulfide, graphite, and aramid fiber, with the balance consisting of a fluorine resin, wherein the resin composition comprises more than 3% by mass and less than 40% by mass of the copper sulfide, 0% by mass or more and less than 4% by mass of the thermoplastic resin, 0% by mass or more and 36% by mass or less of the molybdenum disulfide, 0% by mass or more and 10% by mass or less of the graphite, and 0% by mass or more and 10% by mass or less of the aramid fiber, with the balance being the fluorine resin.

6. The sliding member according to claim 1 or 2,

   wherein the porous layer has
   a matrix phase comprising Cu and Sn, and
   hard particles dispersed in the matrix phase and comprising a Laves phase constituted of a composition of Co, Mo and Si.

7. The sliding member according to claim 6,

   wherein the porous layer further has
   compound phases dispersed in the matrix phase and comprising Co, Fe, Ni, Si, and Cr.

8. The sliding member according to claim 1 or 2,
   wherein a ratio of a thickness of the porous layer to a thickness of the sliding layer is 6:4 to 8:2.

9. The sliding member according to claim 1 or 2,
   wherein the metal substrate is also seamless.

10. The sliding member according to claim 1 or 2,
    wherein the metal substrate has a seam.

11. A bearing comprising:

    a cylindrical metal substrate;
    a seamless porous layer formed on an inner peripheral surface of the metal substrate; and
    a sliding layer covering the porous layer,
    wherein the porous layer is formed of a metal simple substance or an alloy composition, and
    the sliding layer is formed of a resin composition.

12. A method for manufacturing a sliding member having a seamless sliding surface, comprising:

a step of disposing a columnar or cylindrical jig inside a cylindrical metal substrate, and packing raw material powder of a porous layer into a space between an inner peripheral surface of the metal substrate and an outer peripheral surface of the jig;
a step of sintering the raw material powder to form a seamless porous layer comprising a metal simple substance or an alloy composition on the inner peripheral surface of the metal substrate; and
a step of impregnating the surface of the porous layer with a raw material resin of a sliding layer; and
a step of firing the raw material resin to form a sliding layer comprising the resin composition and covering the porous layer.

13. The method according to claim 12, further comprising:
a step of pressing a columnar cored bar inside an inner peripheral surface of the sliding layer with an outer peripheral surface of the metal substrate held with a die to burnish the inner peripheral surface of the sliding layer, resulting in a reduction of the inner diameter circularity to 50 μm or less.

14. The method according to claim 12 or 13,
wherein, in the step of packing the raw material powder, the raw material powder is packed into the space with the jig rotated and/or ultrasonic vibration applied to the jig.

15. The method according to claim 12 or 13,
wherein, in the step of sintering the raw material powder, the raw material powder is sintered, with the metal substrate with the jig placed in a heating furnace.

# FIG. 1

# FIG. 2

# FIG. 3

# FIG. 4

```
        ┌──────────────┐
        │    START     │
        └──────────────┘
                │
                ▼
   ┌─────────────────────────┐
   │     PACKING RAW         │──  S10
   │   MATERIAL POWDER       │
   └─────────────────────────┘
                │
                ▼
   ┌─────────────────────────┐
   │   SINTERING TO FORM     │──  S20
   │    POROUS LAYER         │
   └─────────────────────────┘
                │
                ▼
   ┌─────────────────────────┐
   │  IMPREGNATING WITH      │──  S30
   │  RAW MATERIAL RESIN     │
   └─────────────────────────┘
                │
                ▼
   ┌─────────────────────────┐
   │    FIRING TO FORM       │──  S40
   │    SLIDING LAYER        │
   └─────────────────────────┘
                │
                ▼
   ┌─────────────────────────┐
   │      BURNISHING         │──  S50
   └─────────────────────────┘
                │
                ▼
        ┌──────────────┐
        │     END      │
        └──────────────┘
```

# FIG. 5

# FIG. 6A

# FIG. 6B

11 34 31

PRESS-FITTED
INSIDE HOUSING

11 34

PORTIONS TO BE SEAMED ARE IN
CLOSE CONTACT WITH EACH OTHER

31 31

11 34

34 11

POWDER IS PACKED INTO SPACE
HAVING WIDTH OF 0.3 mm

# FIG. 7

11

12

IMPREGNATION
ROLL

RESIN

# FIG. 8

42

11

41

11

# FIG. 9

PRESS-
FITTED

NO. 1: FORMED MATERIAL OF
SOLID LUBRICATING
COMPOSITE MATERIAL

NO. 2: BACK METAL

NO. 1 TO BE SLIDING SURFACE IS
PRESS-FITTED INSIDE NO. 2,
FOLLOWED BY JOINING AND
INTEGRATION BY HEAT TREATMENT.

①
②

# FIG. 10

**DEEP DRAWING PROCESSING**

# FIG. 11

(a)

(b)

# FIG. 12

|  |  | Example 1 | Example 2 | Example 3 | Example 4 | Example 5 | Comparative Example |
|---|---|---|---|---|---|---|---|
| Sliding layer | Hard parti-cle powder | 15 | 15 | 0 | 0 | 15 | 0 |
|  | Graphite | 2 | 2 | 4 | 4 | 2 | 4 |
|  | MoS$_2$ | 15 | 15 | 7.25 | 7.25 | 15 | 7.25 |
|  | CuS | 0 | 0 | 10.95 | 10.95 | 0 | 10.95 |
|  | PTFE | Balance | Balance | Balance | Balance | Balance | Balance |
| Substrate | Material | Carbon steel | Carbon steel | Carbon steel | Carbon steel | Carbon steel | Carbon steel |
|  | Joint | Absent | Absent | Absent | Absent | Present | Present |
| Porous layer | Material | Cu-10Sn bronze powder | Cu-10Sn bronze powder | Cu-10Sn bronze powder | Cu-10Sn bronze powder | Cu-10Sn bronze powder | Cu-10Sn bronze powder |
|  | Joint | Absent | Absent | Absent | Absent | Absent | Present |
| Processing of sliding layer |  | Burnished | Absent | Burnished | Absent | Burnished | Absent |

# FIG. 13

# FIG. 14

# FIG. 15

# FIG. 16

# FIG. 17

# FIG. 18

# FIG. 19

# FIG. 20

# FIG. 21

(EXAMPLE 2)

(EXAMPLE 1)

39.3μm

11.5μm

# FIG. 22

(EXAMPLE 4)

33.1μm

(EXAMPLE 3)

16.9μm

## INTERNATIONAL SEARCH REPORT

| International application No. |
| --- |
| **PCT/JP2024/006171** |

**A.    CLASSIFICATION OF SUBJECT MATTER**

*F16C 33/20*(2006.01)i; *B22F 3/035*(2006.01)i; *B22F 3/11*(2006.01)i; *B22F 3/26*(2006.01)i; *B22F 5/00*(2006.01)i; *C08K 3/04*(2006.01)i; *C08K 3/30*(2006.01)i; *C08L 27/12*(2006.01)i; *C08L 77/10*(2006.01)i; *C08L 101/00*(2006.01)i; *C22C 1/08*(2006.01)i; *C22C 9/00*(2006.01)i; *C22C 9/02*(2006.01)i; *C22C 9/06*(2006.01)i; *F16C 33/12*(2006.01)i; *F16C 33/14*(2006.01)i

FI:    F16C33/20 A; B22F3/035 C; B22F3/11 A; B22F3/26 H; B22F5/00 C; B22F5/00 S; C08K3/04; C08K3/30; C08L27/12; C08L77/10; C08L101/00; C22C1/08 F; C22C9/00; C22C9/02; C22C9/06; F16C33/12 A; F16C33/12 B; F16C33/14 A

According to International Patent Classification (IPC) or to both national classification and IPC

**B.    FIELDS SEARCHED**

Minimum documentation searched (classification system followed by classification symbols)

F16C33/20; B22F3/035; B22F3/11; B22F3/26; B22F5/00; C08K3/04; C08K3/30; C08L27/12; C08L77/10; C08L101/00; C22C1/08; C22C9/00; C22C9/02; C22C9/06; F16C33/12; F16C33/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 7125647 B1 (SENJU METAL INDUSTRY CO., LTD.) 25 August 2022 (2022-08-25) paragraphs [0018], [0020]-[0021], [0024], [0028]-[0030], [0034], [0038], [0040], fig. 1, 7 | 1-11 |
| Y | JP 5-144482 A (MATSUSHITA ELECTRIC IND. CO., LTD.) 11 June 1993 (1993-06-11) paragraph [0020] | 1-11 |
| Y | JP 2013-111860 A (SUMITOMO RUBBER INDUSTRIES, LTD.) 10 June 2013 (2013-06-10) paragraph [0030] | 1-11 |
| Y | JP 2007-192317 A (NTN CORPORATION) 02 August 2007 (2007-08-02) paragraph [0034], fig. 1 | 2-10 |
| Y | JP 2018-071710 A (SENJU METAL INDUSTRY CO., LTD.) 10 May 2018 (2018-05-10) claim 6, paragraphs [0020], [0021]-[0023], [0051], fig. 1, 4 | 1-15 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 April 2024** | **23 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2024/006171**

**C.    DOCUMENTS CONSIDERED TO BE RELEVANT**

| Category* | Citation of document, with indication, where appropriate, of the relevant passages | Relevant to claim No. |
|---|---|---|
| Y | JP 56-119705 A (YAMAZAKI ELECTRIC INDUSTRY CO., LTD.) 19 September 1981 (1981-09-19)<br>    page 2, upper right column, line 19 to page 3, lower right column, line 9, fig. 1-8 | 1-15 |
| Y | JP 61-140341 A (KOJIMA PRESS CO., LTD.) 27 June 1986 (1986-06-27)<br>    page 2, lower right column, line 11 to page 3, upper left column, line 19, fig. 1, 2 | 13-14 |
| Y | JP 9-143506 A (MITSUBISHI MATERIALS CORPORATION) 03 June 1997 (1997-06-03)<br>    paragraphs [0021]-[0022], fig. 1 | 14 |
| Y | JP 11-054352 A (SUMITOMO METAL INDUSTRIES, LTD.) 26 February 1999 (1999-02-26)<br>    paragraph [0030] | 14 |

**INTERNATIONAL SEARCH REPORT**
Information on patent family members

International application No.

**PCT/JP2024/006171**

| Patent document cited in search report | | | Publication date (day/month/year) | Patent family member(s) | Publication date (day/month/year) |
|---|---|---|---|---|---|
| JP | 7125647 | B1 | 25 August 2022 | (Family: none) | |
| JP | 5-144482 | A | 11 June 1993 | (Family: none) | |
| JP | 2013-111860 | A | 10 June 2013 | KR 10-2013-0060108 A | |
| JP | 2007-192317 | A | 02 August 2007 | (Family: none) | |
| JP | 2018-071710 | A | 10 May 2018 | (Family: none) | |
| JP | 56-119705 | A | 19 September 1981 | (Family: none) | |
| JP | 61-140341 | A | 27 June 1986 | (Family: none) | |
| JP | 9-143506 | A | 03 June 1997 | (Family: none) | |
| JP | 11-054352 | A | 26 February 1999 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018179049 A